(19)

Europäisches
Patentamt
European
Patent Office
Office européen
des brevets

(11)  **EP 2 502 318 B1**

(12)  # EUROPEAN PATENT SPECIFICATION

(45) Date of publication and mention
of the grant of the patent:
**11.09.2013   Bulletin 2013/37**

(51) Int Cl.:
**H02H 3/30** *(2006.01)*      **H02H 3/28** *(2006.01)*

(21) Application number: **09756303.5**

(22) Date of filing: **17.11.2009**

(86) International application number:
**PCT/EP2009/065340**

(87) International publication number:
**WO 2011/060814 (26.05.2011 Gazette 2011/21)**

(54) **FUZZY INTERFERENCE RELAY AND METHOD FOR CURRENT DIFFERENTIAL PROTECTION OF A TRANSMISSION LINE**

FUZZY-INTERFERENZRELAIS UND VERFAHREN FÜR STROMDIFFERENZIALSCHUTZ EINER ÜBERTRAGUNGSLEITUNG

RELAIS D'INTERFÉRENCE FLOUE ET PROCÉDÉ DE PROTECTION DIFFÉRENTIELLE DE COURANT D'UNE LIGNE DE TRANSMISSION

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**26.09.2012   Bulletin 2012/39**

(73) Proprietors:
• **Alstom Technology Ltd.**
  **5400 Baden (CH)**
• **Schneider Electric Energy UK Ltd**
  **Telford TF3 3BL (GB)**

(72) Inventors:
• **REBIZANT, Waldemar**
  **PL-53-678 Wroclaw (PL)**
• **SOLAK, Krzysztof**
  **PL-55-330 Miekinia (PL)**
• **WISZNIEWSKI, Andrzej**
  **PL-51-144 Wroclaw (PL)**
• **KLIMEK, Andrzej**
  **Surrey**
  **British Columbia VS3 7W8 (CA)**

(74) Representative: **Ilgart, Jean-Christophe et al**
  **BREVALEX**
  **95 rue d'Amsterdam**
  **75378 Paris Cedex 8 (FR)**

(56) References cited:
**EP-A2- 1 207 610        WO-A1-02/33426**
**US-A1- 2007 070 565    US-A1- 2009 231 769**

• **Huisheng Wang; Keerthipala, W.W.L.: "Fuzzy-neuro approach to fault classification for transmission line protection" Nanyang Technol. Univ. IEEE Transactions on Power Delivery vol. 13, no. 4, 6 August 2002 (2002-08-06), pages 1093-1104, XP002589602 ISSN: 0885-8977 DOI: 10.1109/61.714467 Retrieved from the Internet: URL:http://ieeexplore.ieee.org/stamp/ stamp .jsp?tp=&arnumber=714467 [retrieved on 2010-06-30]**
• **Myong-Chul Shin; Chul-Won Park; Jong-Hyung Kim;: "Fuzzy logic-based relaying for large power transformer protection" Sch. of Electr. & Comput. Eng., Sungkyunkwan Univ., Suwon, South Korea IEEE Transactions on Power Delivery vol. 18, no. 3, 9 July 2003 (2003-07-09), pages 718-724, XP002589601 ISSN: 0885-8977 DOI: 10.1109/TPWRD.2003.813598 Retrieved from the Internet: URL:http://ieeexplore.ieee.org/stamp/ stamp .jsp?tp=&arnumber=1208347 [retrieved on 2010-06-29]**

**Description**

**TECHNICAL FIELD OF THE INVENTION**

The invention relates to the protection of a transmission line using current measurements obtained with measurements transducers of the current transformer type.

The invention also concerns transmission line protection systems, and more specifically, current differential protection relay and method for power transmission lines.

The invention also concerns a method for operating a current differential protection relay electrically coupled to a protection zone of an electrical power transmission line, methods for protecting a zone of a transmission line having current differential protection relays coupled thereto, and a current differential protection relay.

The protection zone may include parts of a transmission line having two terminal ends.

**PRIOR ART**

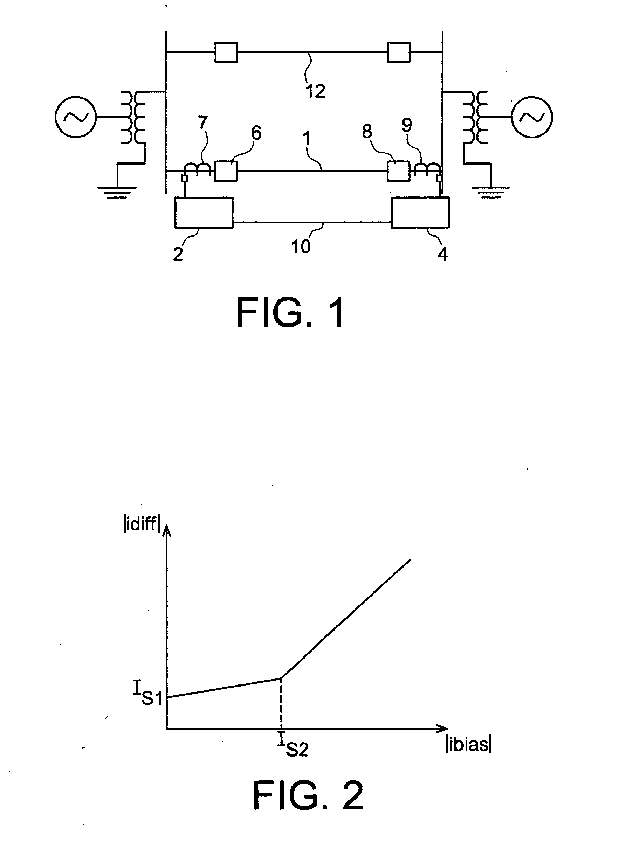

A current differential protection system uses only the electrical currents values information obtained from the protected line. Current differential protection requires a comparison of the currents entering and leaving a protected zone of the line. An example of a current differential protection system of an electrical transmission line is represented on figure 1. Protective relays 2, 4 are located at each end of a protected line 1. Such system may provide phase-segregated current differential protection. Circuit breakers 6, 8 and current transformers (CT) 7, 9 are associated, respectively, with relays 2, 4. A communication between the relays 2, 4 is made by a communication line 10.

US 2007/0070565 discloses a relay for current differential protection of at least one transmission line, comprising a calculating function of symmetrical sequence currents, which include zero sequence currents and negative sequence currents of currents of each phase of the transmission line at local and remote ends of the protected transmission line, and a further calculating function which outputs a tripping signal for the control of at least one circuit breaker arranged on the transmission line and associated with the relay.

In operation, each current transformer 7, 9 measures line current values at each ends of the protected line 1, and transmits those values to its associated relay. Each relay 2, 4 transmits those values to the relay located at the other end of the line 1, for each phase of the transmission line 1. Thus, for each phase, the relay 2 will combine the current value $i_s$ given by the current transformer 7 with the line current values $i_r$ sent from the remote relay, that is the relay 4, and transmitted on the communication line 10. The sum of the current values is zero ($i_s + i_r = 0$) when an external fault appears (for example on an external line 12), while internal faults (on the protected line 1, between the relays 2, 4) will result in a non-zero combined currents (($i_s + i_r \neq 0$). Moreover, the sum of the currents values is equal to zero when there is no fault, neither on the external line 12 nor on the protected line 1.

Each relay 2, 4 controls its associated circuit breaker 6, 8 according to a stabilization function in form of an appropriate diff-bias characteristic which represents the tripping conditions of the circuit breakers 6, 8 associated with the relays 2, 4. The use of such a diff-bias characteristic prevents relays from undesired line tripping due to differential current resulting from not fully compensated charging current, CT errors, etc. A corresponding diff-bias characteristic is shown on figure 2. According to this characteristic, the trip criteria are:

for $|i_{bias}| < I_{S2}$, tripping when $|i_{diff}| > k_1 |i_{bias}| + I_{S1}$;
for $|i_{bias}| > I_{S2}$, tripping when $|i_{diff}| > k_2 |i_{bias}| - (k_2-k_1) I_{S2} + I_{S1}$;

with:

$$|i_{bias}| = 0.5(|i_s| + |i_r|);$$

$$|i_{diff}| = |i_s + i_r|;$$

$k_1$, $k_2$: bias percentages.

The values of $I_{s1}$, $I_{s2}$, $k_1$ and $k_2$ are chosen arbitrarily according to the characteristics of the line to be protected and the desired protection type.

Although for most cases this standard protection arrangement is sufficient, there are still cases when the protection may fail, especially for external faults with severe CT saturation due to decaying DC components in fault currents with long time constant.

## DESCRIPTION OF THE INVENTION

Thus there is a need for an improved protection of the transmission lines with improved stabilization for external fault cases, yet with maintained sensitivity and operation speed for internal faults requiring prompt tripping.
One embodiment of the invention proposes a relay for current differential protection of at least one transmission line, comprising at least:

a first calculator of symmetrical sequence currents, or symmetrical sequence components, which include zero sequence currents $i_0$, positive sequence currents $i_1$ and negative sequence currents $i_2$, of currents of each phase of the transmission line at local and remote ends of the protected transmission line;
a second calculator of phase differences $\varphi_{12}$ and $\varphi_{012}$ between combination currents $i_{12}$ and $i_{012}$ of the symmetrical sequence currents $i_0$, $i_1$ and $i_2$ of each ends of the transmission line;
a fuzzy inference system which outputs a variable y whose value is calculated according to the values of the phase differences $\varphi_{12}$ and $\varphi_{012}$;
a third calculator which outputs a tripping signal for the control of at least one circuit breaker arranged on the transmission line and associated with the relay, the value of the tripping signal being calculated according to the values of the variable y and the values of the currents of each phase of the transmission line at the local and remote ends of the protected transmission line.

Such current differential protection enables better tripping performances, particularly for cases of external faults with severe CT saturation, when traditional current differential protection may maloperate. It avoids unwanted tripping of healthy transmission line, which may endanger stability of the global power system, especially when the protected line is heavily loaded.
The current differential protection according to the invention combines strengths of both currents magnitude and phase values comparison criteria. The value of the tripping signal, which may correspond to a relay stabilization characteristic, is adapted according to the value of the output of the fuzzy inference system which applies fuzzy logic on phase differences of sequence currents combinations. Such adaptive stabilization characteristic improves current differential protection performances and ensures higher robustness, in particular for cases of external faults with CT saturation.
The combination currents $i_{12}$ and $i_{012}$ may be such that:

$$i_{12} = i_2 - k_{1g}i_1;$$

$$i_{012} = k_{2p}i_2 + k_{1g}(i_1+i_0);$$

with $k_{1g} = k_{2p} = 0$ when the current amplitude in each phase is higher than or equal to around 1.5 per unit in any phase, and $k_{1g}$ and $k_{2p}$ being non-zero real numbers otherwise.
The fuzzy inference system may comprise at least:

- a fuzzyfication unit which may convert the values of the phase differences $\varphi_{12}$ and $\varphi_{012}$ into fuzzy variables $\mu(\varphi_{12})$ and $\mu(\varphi_{012})$;
- an inference operation unit which may perform inference operation on fuzzy variables $\mu(\varphi_{12})$ and $\mu(\varphi_{012})$ according to a fuzzy rules base and may outputs final fuzzy sets $\mu(y)$ as a result of said inference operation;
- a defuzzyfication unit which may convert the final fuzzy sets $\mu(y)$ into the variable y by a defuzzyfication operation.

In this case, the fuzzyfication unit may convert the phase difference $\varphi_{12}$ into the fuzzy variable $\mu(\varphi_{12})$ such that:

- when the value of $\varphi_{12}$ is included between 0° and 75°, $\mu(\varphi_{12})$ may be "Low" with a value equal to 1 and "High" with a value equal to 0;
- when the value of $\varphi_{12}$ is included between 80° and 180°, $\mu(\varphi_{12})$ may be "Low" with a value equal to 0 and "High" with a value equal to 1;

-

when the value of $\varphi_{12}$ is included between 75° and 80°, $\mu(\varphi_{12})$ may be "Low" with a value equal to $\quad 1 - \dfrac{\varphi_{12} - 75}{5}$

and "High" with a value equal to $\dfrac{\varphi_{12} - 75}{5}$ .

The fuzzyfication unit may convert the phase difference $\varphi_{012}$ into the fuzzy variable $\mu(\varphi_{012})$ such that:

- when the value of $\varphi_{012}$ is included between 0° and 75°, $\mu(\varphi_{012})$ may be "Low" with a value equal to 1 and "High" with a value equal to 0;
- when the value of $\varphi_{012}$ is included between 85° and 180°, $\mu(\varphi_{012})$ may be "Low" with a value equal to 0 and "High" with a value equal to 1;

-

when the value of $\varphi_{012}$ is included between 75° and 85°, $\mu(\varphi_{12})$ may be "Low" with a value equal to $\quad 1 - \dfrac{\varphi_{012} - 75}{10}$

and "High" with a value equal to $\dfrac{\varphi_{012} - 75}{10}$ .

The inference operation unit may perform the inference operation according to the following fuzzy rules base:

IF $\varphi_{012}$ is "High" AND $\varphi_{12}$ is "High" THEN y is "L";
IF $\varphi_{012}$ is "Low" AND $\varphi_{12}$ is "High" OR $\varphi_{012}$ is "High" AND $\varphi_{12}$ is "Low" THEN y is "M";
IF $\varphi_{012}$ is "Low" AND $\varphi_{12}$ is "Low" THEN y is "H";
with "L", "M" and "H" which are singletons corresponding to output values 0, 1 and 2 respectively.

The logical functions "AND" and "OR" of the fuzzy rules base may correspond to operators "Product" and "Maximum" respectively.

The defuzzyfication operation may be a weighting factor method, the resulting output value y may be expressed by:

$$y = \frac{\mu_L y_L + \mu_M y_M + \mu_H y_H}{\mu_L + \mu_M + \mu_H} ,$$

with
$\mu_L = 1$ when y = 0, and $\mu_L = 0$ otherwise;
$\mu_M = 1$ when y = 1, and $\mu_M = 0$ otherwise;
$\mu_H = 1$ when y = 2, and $\mu_L = 0$ otherwise.

The third calculator may calculate values of bias percentages $k_1$ and $k_2$ of a stabilized characteristic which corresponds to the tripping signal such that:

$k_1 = 0.3 + 0.8y$ when the parameter y is higher than around 1.5, and $k_1 = 0.3$ otherwise;

$$k_2 = 1.5 + 1.6y;$$

the tripping conditions of the circuit breaker being:

for $|i_{bias}| < I_{S2}$, tripping when $|i_{diff}| > k_1 |i_{bias}| + I_{S1}$;
for $|i_{bias}| > I_{S2,}$ tripping when $|i_{diff}| > k_2 |i_{bias}| - (k_2-k_1) I_{S2} + I_{S1}$;
with, for each phase of the transmission line:

$|i_{bias}| = 0.5(|i_s| + |i_r|)$ and
$|i_{diff}| = |i_s + i_r|$, with
is: current at the local end of the protected transmission line;
$i_r$: current at the remote end of the protected transmission line;
$I_{S1}$, $I_{S2}$: non-zero positive real numbers.

Another embodiment of the present invention concerns a current differential protection method of at least one transmission line, comprising at least the steps of:

- calculating symmetrical sequence currents, which include zero sequence currents $i_0$, positive sequence currents $i_1$ and negative sequence currents $i_2$, of currents of each phase of the transmission line at local and remote ends of the protected transmission line;
- calculating phase differences $\varphi_{12}$ and $\varphi_{012}$ between combination currents $i_{12}$ and $i_{012}$ of the symmetrical sequence currents $i_0$, $i_1$ and $i_2$ of each ends of the transmission line;
- applying a fuzzy inference method on the phase differences $\varphi_{12}$ and $\varphi_{012}$ which output a variable y whose value is calculated according to the values of the phase differences $\varphi_{12}$ and $\varphi_{012}$;
- calculating a value of a tripping signal for the control of at least one circuit breaker arranged on the transmission line according to the values of the variable y and the values of the currents of each phase of the transmission line at the local and remote ends of the protected transmission line.

The fuzzy inference method may comprise at least the steps of:

- fuzzyfication operation which may convert the values of the phase differences $\varphi_{12}$ and $\varphi_{012}$ into fuzzy variables $\mu(\varphi_{12})$ and $\mu(\varphi_{012})$;
- inference operation on fuzzy variables $\mu(\varphi_{12})$ and $\mu(\varphi_{012})$ according to a fuzzy rules base to output final fuzzy sets $\mu(y)$;
- defuzzyfication operation which may convert the final fuzzy sets $\mu(y)$ into the variable y.

The fuzzyfication operation may convert the phase difference $\varphi_{12}$ into the fuzzy variable $\mu(\varphi_{12})$ such that:

- when the value of $\varphi_{12}$ is included between 0° and 75°, $\mu(\varphi_{12})$ may be "Low" with a value equal to 1 and "High" with a value equal to 0;
- when the value of $\varphi_{12}$ is included between 80° and 180°, $\mu(\varphi_{12})$ may be "Low" with a value equal to 0 and "High" with a value equal to 1;

-

when the value of $\varphi_{12}$ is included between 75° and 80°, $\mu(\varphi_{12})$ may be "Low" with a value equal to $1 - \dfrac{\varphi_{12} - 75}{5}$

and "High" with a value equal to $\dfrac{\varphi_{12} - 75}{5}$ .

The fuzzyfication operation may convert the phase difference $\varphi_{012}$ into the fuzzy variable $\mu(\varphi_{012})$ such that:

- when the value of $\varphi_{012}$ is included between 0° and 75°, $\mu(\varphi_{012})$ may be "Low" with a value equal to 1 and "High" with a value equal to 0;
- when the value of $\varphi_{012}$ is included between 85° and 180°, $\mu(\varphi_{012})$ may be "Low" with a value equal to 0 and "High" with a value equal to 1;

-

when the value of $\varphi_{012}$ is included between 75° and 85°, $\mu(\varphi_{12})$ may be "Low" with a value equal to $1 - \dfrac{\varphi_{012} - 75}{10}$

and "High" with a value equal to $\dfrac{\varphi_{012} - 75}{10}$ .

The inference operation may be performed according to the following fuzzy rules base:

IF $\varphi_{012}$ is "High" AND $\varphi_{12}$ is "High" THEN y is "L";
IF $\varphi_{012}$ is "Low" AND $\varphi_{12}$ is "High" OR $\varphi_{012}$ is "High" AND $\varphi_{12}$ is "Low" THEN y is "M";
IF $\varphi_{012}$ is "Low" AND $\varphi_{12}$ is "Low" THEN y is "H";

with "L", "M" and "H" which are singletons corresponding to output values 0, 1 and 2 respectively.

The values of bias percentages $k_1$ and $k_2$ of a stabilized characteristic which corresponds to the tripping signal may be calculated such that:

$$k_1 = 0.3 + 0.8y;$$

$$k_2 = 1.5 + 1.6y;$$

the tripping conditions of the circuit breaker being:

for $|i_{bias}| < I_{S2}$, tripping when $|i_{diff}| > k_1 |i_{bias}| + I_{S1}$;
for $i_{bias} > I_{S2}$, tripping when $|i_{diff}| > k_2 |i_{bias}| - (k_2-k_1) I_{S2} + I_{S1}$;

with, for each phase of the transmission line:

$|i_{bias}| = 0.5(|i_s| + |i_r|)$ and
$|i_{diff}| = |i_s + i_r|$, with
$i_\varepsilon$: current at the local end of the protected transmission line;
$i_r$: current at the remote end of the protected transmission line;
$I_{S1}$, $I_{S2}$: non-zero positive real numbers.

The invention also concerns a current differential protection system comprising at least two relays as above described, each being coupled to one end of a transmission line and linked to each other with communication means.

The values of the currents at the local and remote ends of the transmission line may be measured by measurement transducers, for example current transformers arranged on each ends of the transmission line.

The invention also concerns a method of operating a current differential protection relay electrically coupled to a transmission line, said method comprising the execution of a current differential protection method as above described.

**BRIEF DESCRIPTION OF THE DRAWINGS**

This invention will be better understood upon reading the description of exemplary embodiments given for purely illustrative and non-limiting purposes, with reference to the appended drawings, in which:

- figure 1 shows a current differential protection system of a electrical transmission line of the prior art;
- figure 2 shows a stabilization function of a current differential protection relay;
- figure 3 shows a current differential protection system for a two ends transmission line, according to a particular embodiment of the invention;
- figure 4 shows a relay, according to a particular embodiment of the invention, of a current differential protection system;
- figure 5 shows a block diagram of a fuzzy inference system of a relay, according to a particular embodiment of the invention;
- figure 6 shows trapezoidal membership functions used by a fuzzyfication unit of a fuzzyfication inference system of a relay, according to a particular embodiment of the invention;
- figure 7 shows final fuzzy sets got with an inference operation unit of a fuzzyfication inference system of a relay, according to a particular embodiment of the invention.

Identical, similar or equivalent portions of the figures described below bear the same numeric references so as to facilitate moving from one figure to another.

The various portions shown in the figures are not necessarily shown according to one uniform scale, in order to render the figures more legible.

The various possibilities (alternatives and embodiments) should be understood as not being mutually exclusive and can be combined with one another.

## DETAILED DESCRIPTION OF PARTICULAR EMBODIMENTS

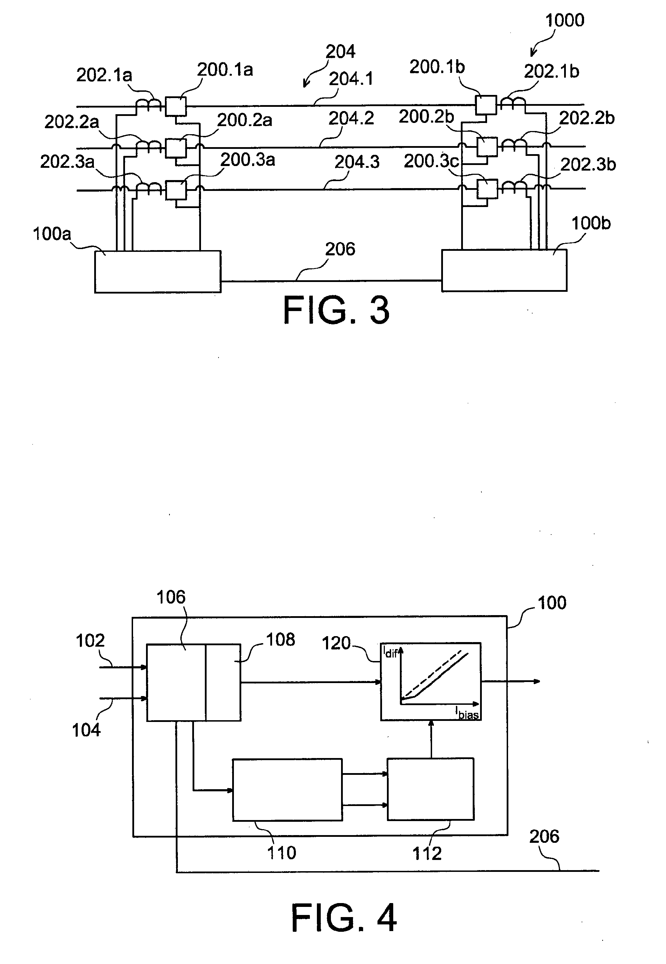

Figure 3 shows a schematic view of a current differential protection system 1000 according to a particular embodiment. This system comprises two relays 100a, 100b, each being coupled to one end, or terminal, of a transmission line 204 which is the electrical line protected by the system 1000. The coupling is made for each phase 204.1 - 204.3 of the transmission line 204, here for the three phases of the line 204. Circuit breakers 200.1a - 200.3a and 200.1b-200.3b and current transformers (CT) 202.1a - 202.3a and 202.1b - 202.3b are arranged on each phases 204.1 - 204.3 of the transmission line 204 and are associated, respectively, with relays 100a and 100b. A communication between the relays 100a and 100b is made by a communication line 206 which is a fiber optic line in this particular embodiment. However, the communication line 206 between the relays 100a, 100b may be of another communication link type, like a multiplexed link for example.

In operation, each current transformer 202.1a - 202.3a, 202.1b - 202.3b measures line current values at each ends of the protected line 204 and transmits those values to its associated relay 100a, 100b. Each relay 100a, 100b transmits those values to the relay at the other end of the line 204, for each phase 204.1 - 204.3 of the transmission line 204. Thus, for each phase, each relay 100a, 100b combines the local current $i_s$ given by the associated current transformers with the remote line current values $i_r$ sent from the remote relay.

Figure 4 shows a schematic view of a relay 100 which corresponds to one of the relays 100a, 100b, according a particular embodiment. The operation of the relay 100 is described below for one phase of the transmission line 204, but it is the same for the other phases of the line 204, for example in a three phases electrical power system like the system 1000 represented in figure 3.

The relay 100 comprises a first input 102 for receiving, for each phase, the current $i_s$ measured by its associated current transformer and a second input 104 for receiving line current values $i_r$ from the remote relay at the opposite end of the protected zone of the transmission line 204. The current at each line end may be measured by sampling at a fixed frequency. The data samples represent the instantaneous values of the current waveforms, and may contain dc offset, harmonics and high frequency components.

The signals $i_s$ and $i_r$ are then filtered with a filter 106, which may be a digital filter using the one cycle Fourier filtering technique which yields the power frequency components of the current waveforms in vector form. The vector values of all three phases together with other relevant timing and status information are transmitted over the communication channels to the other ends of the line. This information is considered as remote information for the other(s) relay (s). Based on the local and received vector information, differential currents $i_{diff}$ and bias, or stabilization, currents $i_{bias}$ are calculated by a calculation unit 108 such that, for each phase:

$$|i_{bias}| = 0.5(|i_s| + |i_r|),$$

and

$$|i_{diff}| = |i_s + i_r|.$$

The values of $i_r$ and $i_s$ are then used by a first calculator 110 for calculating sequence currents, that is zero sequence currents $i_0$, positive sequence currents $i_1$ and negative sequence currents $i_2$ from the local and remote vector information obtained at the output of the filter 106. The sequence currents are, for the remote vector information:

$$i_0 = \frac{1}{3}\left(i_{ra} + i_{rb} + i_{rc}\right)$$

$$i_1 = \frac{1}{3}\left(i_{ra} + a i_{rb} + a^2 i_{rc}\right)$$

$$i_2 = \frac{1}{3}\left(i_{ra} + a^2 i_{rb} + a i_{rc}\right)$$

with $a = 1\angle 120°$, and $i_{ra}$, $i_{rb}$, $i_{rc}$ which correspond respectively to current at the remote end for each of the three phases a, b and c.

For the local vector information, the sequence currents are:

$$i_0 = \frac{1}{3}\left(i_{sa} + i_{sb} + i_{sc}\right)$$

$$i_1 = \frac{1}{3}\left(i_{sa} + a i_{sb} + a^2 i_{sc}\right)$$

$$i_2 = \frac{1}{3}\left(i_{sa} + a^2 i_{sb} + a i_{sc}\right)$$

with $i_{sa}$, $i_{sb}$, $i_{sc}$ which correspond respectively to local current of each of the three phases a, b and c.

These sequence currents are then used by the first calculator 110 to obtain the value of a first combination signal $i_{12}$:

$$i_{12} = i_2 - k_{1g} i_1$$

$i_{12}$ is the combination of the negative sequence current $i_2$ with the positive sequence current $i_1$. In this combination, the negative sequence current $i_2$ always appear, while the positive sequence current is only subtracted with adequate coefficient $k_{1g}$ when a three-phase fault occurs. Indeed, for symmetrical faults (that is when the current amplitude in each phase is higher than or equal to around 1.5 per unit in any phase), $k_{1g}$ is equal to zero. Otherwise, the value of $k_{1g}$ is chosen non-zero, and, for example, equal to 6.

A second combination signal $i_{012}$ is also calculated by the second calculator 110:

$$i_{012} = k_{2p} i_2 + k_{1g}(i_1 + i_0)$$

Thus, compared with $i_{12}$, $i_{012}$ is enriched with zero sequence current to improve detecting ground faults. Calculation of combination signals is initiated when the bias current is greater than or equal to 1.5 per unit in any phase. Indeed, like $k_{1g}$, for symmetrical faults, $k_{2p}$ is equal to zero. Otherwise, the value of $k_{2p}$ is chosen non-zero, and, for example, equal to 6.

The combination signals $i_{12}$ and $i_{012}$ are calculated for all sequence currents previously calculated, that is from the local and remote vector information.

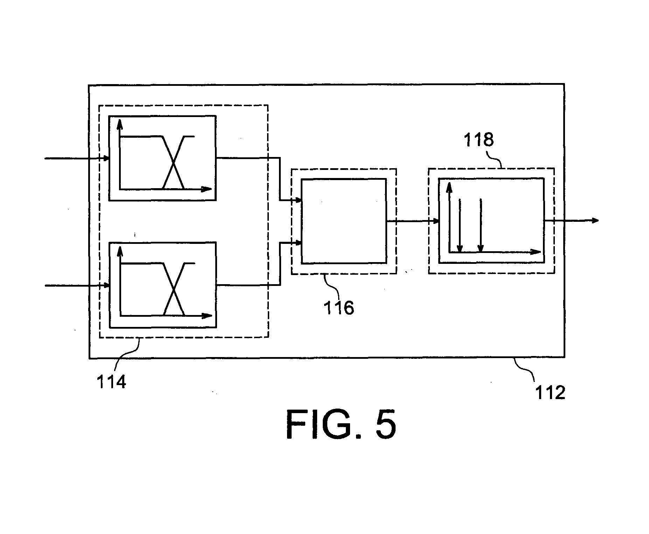

Then the values of phase differences $\varphi_{12}$ and $\varphi_{012}$ between the combination signals $i_{12}$ and $i_{012}$ are calculated by a second calculator (which is the first calculator 110 in the example represented in figure 5) and outputted from the calculator 110 to a fuzzy inference system 112.

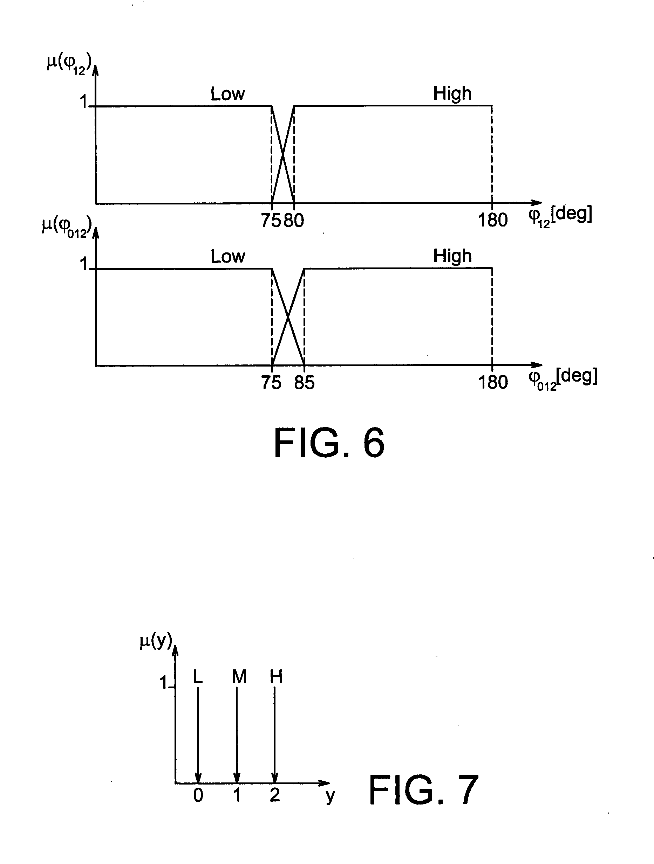

Figure 5 shows a block diagram of the fuzzy inference system 112, which comprises three main units. A first unit 114 is a fuzzyfication unit which converts the input variables, that is $\varphi_{12}$ and $\varphi_{012}$, into fuzzy variables $\mu(\varphi_{12})$ and $\mu(\varphi_{012})$ with use of trapezoidal membership functions as represented on figure 6.

Thus, when the value of $\varphi_{12}$ is included between 0° and 75°, $\mu(\varphi_{12})$ is "Low" with a value equal to 1 and "High" with a value equal to 0. When the value of $\varphi_{12}$ is included between 80° and 180°, then $\mu(\varphi_{12})$ is "Low" with a value equal to 0 and "High" with a value equal to 1. When the value of $\varphi_{12}$ is included between 75° and 80°, $\mu(\varphi_{12})$ is "Low"

with a value equal to $1 - \dfrac{\varphi_{12} - 75}{5}$ and "High" with a value equal to $\dfrac{\varphi_{12} - 75}{5}$ .

When the value of $\varphi_{012}$ is included between 0° and 75°, $\mu(\varphi_{012})$ is "Low" with a value equal to 1 and "High" with a value equal to 0. When the value of $\varphi_{012}$ is included between 85° and 180°, $\mu(\varphi_{012})$ is "Low" with a value equal to 0 and "High" with a value equal to 1. When the value of $\varphi_{012}$ is included between 75° and 85°, $\mu(\varphi_{012})$ is "Low" with

a value equal to $1 - \dfrac{\varphi_{012} - 75}{10}$ and "High" with a value equal to $\dfrac{\varphi_{012} - 75}{10}$ .

Although trapezoidal membership functions are used in this embodiment, other types of membership functions may be used to convert phase differences into fuzzy variables (S-shaped, sigmoidal, Z-shaped, triangular membership functions, ...).

Then, a second unit 116, which is an inference operation unit, performs an inference operation on fuzzy variables $\mu(\varphi_{12})$ and $\mu(\varphi_{012})$ to obtain final fuzzy sets $\mu(y)$ . In this embodiment, the fuzzy rules base used by the second unit 116 is composed of three statements:

IF $\varphi_{012}$ is "High" AND $\varphi_{12}$ is "High" THEN $\mu(y)$ is "L";
IF $\varphi_{012}$ is "Low" AND $\varphi_{12}$ is "High" OR $\varphi_{012}$ is "High" AND $\varphi_{12}$ is "Low" THEN $\mu(y)$ is "M";
IF $\varphi_{012}$ is "Low" AND $\varphi_{12}$ is "Low" THEN $\mu(y)$ is "H";

with "L", "M" and "H" which are singletons corresponding to output values 0, 1 and 2 respectively. (see figure 7 which represents the final fuzzy sets).

The inference method used with the fuzzy rules base may be the PROD-MAX method, in which the operators "Product" and "Maximum" represent the logical functions "AND" and "OR", respectively. However, other inference methods, like MAX-MIN (in which the operators "Minimum" and "Maximum" represent the logical functions "AND" and "OR") or SUM-PROD (in which the operators "Sum" and "Product" represent the logical functions "OR" and "AND") can be used.

Finally, a third unit 118 performs a defuzzyfication operation which converts the final fuzzy sets $\mu(y)$ back to respective crisp values by the use of a weighting factor method, the resulting crisp value being expressed by:

$$ y = \frac{\mu_L y_L + \mu_M y_M + \mu_H y_H}{\mu_L + \mu_M + \mu_H} , $$

with

$\mu_L = 1$ when $y = 0$, and $\mu_L = 0$ otherwise;
$\mu_M = 1$ when $y = 1$, and $\mu_M = 0$ otherwise;
$\mu_H = 1$ when $y = 2$, and $\mu_L = 0$ otherwise.

The value y obtained at the output of the fuzzy inference system 112 is then used by a third calculator 120 of the relay 100 to calculate the values of bias percentages $k_1$ and $k_2$ of a stabilized characteristic:

$k_1 = 0.3 + 0.8y$ when the parameter y is higher than around 1.5, and $k_1 = 0.3$ otherwise;

$$ k_2 = 1.5 + 1.6y. $$

Thus the tripping conditions of the relay 100 are:

For $|i_{bias}| < I_{S2}$, tripping when $|i_{diff}| > k_1 |i_{bias}| + I_{S1}$;

For $|i_{bias}| > I_{S2}$, tripping when $|i_{diff}| > k_2 |i_{bias}| - (k_2-k_1) I_{S2} + I_{S1}$;

with $I_{S1} = 0.3$ and $I_{S2} = 2$.

**Claims**

1.  A relay (100, 100a, 100b) for current differential protection of at least one transmission line (204), comprising at least:

    a first calculator (110) of symmetrical sequence currents, which include zero sequence currents $i_0$, positive sequence currents $i_1$ and negative sequence currents $i_2$, of currents of each phase (204.1, 204.2, 204.3) of the transmission line (204) at local and remote ends of the protected transmission line (204);
    a second calculator (110) of phase differences $\varphi_{12}$ and $\varphi_{012}$ between combinations currents $i_{12}$ and $i_{012}$ of the symmetrical sequence currents $i_0$, $i_1$ and $i_2$ of each ends of the transmission line (204);
    a fuzzy inference system (112) which outputs a variable y whose value is calculated according to the values of the phase differences $\varphi_{12}$ and $\varphi_{012}$;
    a third calculator (120) which outputs a tripping signal for the control of at least one circuit breaker (200.1a, 200.2a, 200.3a, 200.1b, 200.2b, 200.3b) arranged on the transmission line (204) and associated with the relay (100, 100a, 100b), the value of the tripping signal being calculated according to the values of the variable y and the values of the currents of each phase (204.1, 204.2, 204.3) of the transmission line (204) at the local and remote ends of the protected transmission line (204).

2.  The relay (100, 100a, 100b) according to claim 1, wherein the combination currents $i_{12}$ and $i_{012}$ are such that:

$$i_{12} = i_2 - k_{1g}i_1;$$

$$i_{012} = k_{2p}i_2 + k_{1g}(i_1+i_0);$$

    with $k_{1g} = k_{2p} = 0$ when the current amplitude in each phase is higher than or equal to around 1.5 per unit in any phase, and $k_{1g}$ and $k_{2p}$ being non-zero real numbers otherwise.

3.  The relay (100, 100a, 100b) according to one of previous claims, wherein the fuzzy inference system (112) comprises at least:

    - a fuzzyfication unit (114) which converts the values of the phase differences $\varphi_{12}$ and $\varphi_{012}$ into fuzzy variables $\mu(\varphi_{12})$ and $\mu(\varphi_{012})$;
    - an inference operation unit (116) which performs inference operation on fuzzy variables $\mu(\varphi_{12})$ and $\mu(\varphi_{012})$ according to a fuzzy rules base and outputs final fuzzy sets $\mu(y)$ as a result of said inference operation;
    - a defuzzyfication unit (118) which converts the final fuzzy sets $\mu(y)$ into the variable y by a defuzzyfication operation.

4.  The relay (100, 100a, 100b) according to claim 3, wherein the fuzzyfication unit (114) converts the phase difference $\varphi_{12}$ into the fuzzy variable $\mu(\varphi_{12})$ such that:

    - when the value of $\varphi_{12}$ is included between 0° and 75°, $\mu(\varphi_{12})$ is "Low" with a value equal to 1 and "High" with a value equal to 0;
    - when the value of $\varphi_{12}$ is included between 80° and 180°, $\mu(\varphi_{12})$ is "Low" with a value equal to 0 and "High" with a value equal to 1;

    - when the value of $\varphi_{12}$ is included between 75° and 80°, $\mu(\varphi_{12})$ is "Low" with a value equal to $1 - \dfrac{\varphi_{12} - 75}{5}$ and "High" with a value equal to $\dfrac{\varphi_{12} - 75}{5}$ .

**5.** The relay (100, 100a, 100b) according to one of claims 3 or 4, wherein the fuzzyfication unit (114) converts the phase difference $\varphi_{012}$ into the fuzzy variable $\mu(\varphi_{012})$ such that:

- when the value of $\varphi_{012}$ is included between 0° and 75°, $\mu(\varphi_{012})$ is "Low" with a value equal to 1 and "High" with a value equal to 0;
- when the value of $\varphi_{012}$ is included between 85° and 180°, $\mu(\varphi_{012})$ is "Low" with a value equal to 0 and "High" with a value equal to 1;

- when the value of $\varphi_{012}$ is included between 75° and 85°, $\mu(\varphi_{12})$ is "Low" with a value equal to $1 - \dfrac{\varphi_{012} - 75}{10}$

and "High" with a value equal to $\dfrac{\varphi_{012} - 75}{10}$ .

**6.** The relay (100, 100a, 100b) according to one of claims 3 to 5, wherein the inference operation unit (116) performs the inference operation according to the following fuzzy rules base:

IF $\varphi_{012}$ is "High" AND $\varphi_{12}$ is "High" THEN y is "L";
IF $\varphi_{012}$ is "Low" AND $\varphi_{12}$ is "High" OR $\varphi_{012}$ is "High" AND $\varphi_{12}$ is "Low" THEN y is "M";
IF $\varphi_{012}$ is "Low" AND $\varphi_{12}$ is "Low" THEN y is "H";

with "L", "M" and "H" which are singletons corresponding to output values 0, 1 and 2 respectively.

**7.** The relay (100, 100a, 100b) according to claim 6, wherein the logical functions "AND" and "OR" of the fuzzy rules base correspond to operators "Product" and "Maximum" respectively.

**8.** The relay (100, 100a, 100b) according to one of claims 3 to 7, wherein the defuzzyfication operation is a weighting factor method, the resulting output value y being expressed by:

$$ y = \frac{\mu_L y_L + \mu_M y_M + \mu_H y_H}{\mu_L + \mu_M + \mu_H} , $$

with
$\mu_L = 1$ when y = 0, and $\mu_L = 0$ otherwise;
$\mu_M = 1$ when y = 1, and $\mu_M = 0$ otherwise;
$\mu_H = 1$ when y = 2, and $\mu_L = 0$ otherwise.

**9.** The relay (100, 100a, 100b) according to one of previous claims, wherein the third calculator (120) calculates values of bias percentages $k_1$ and $k_2$ of a stabilized characteristic which corresponds to the tripping signal such that:

$k_1 = 0.3 + 0.8y$ when the parameter y is higher than around 1.5, and $k_1 = 0.3$ otherwise;

$$ k_2 = 1.5 + 1.6y; $$

the tripping conditions of the circuit breaker (200.1a, 200.2a, 200.3a, 200.1b, 200.2b, 200.3b) being:

for $|i_{bias}| < I_{S2}$, tripping when $|i_{diff}| > k_1 |i_{bias}| + I_{S1}$;
for $|i_{bias}| > I_{S2}$, tripping when $|i_{diff}| | > k_2 |i_{bias}| - (k_2 - k_1) I_{S2} + I_{S1}$;
with, for each phase (204.1, 204.2, 204.3) of the transmission line (204):

$$|\mathtt{i_{bias}}| = 0.5(|\mathtt{i_s}| + |\mathtt{i_r}|),$$

and

$$|\mathtt{i_{diff}}| = |\mathtt{i_s} + \mathtt{i_r}|,$$

with

$i_s$: current at the local end of the protected transmission line (204);

$i_r$: current at the remote end of the protected transmission line (204);

$I_{S1}$, $I_{S2}$: non-zero positive real numbers.

10. A current differential protection method of at least one transmission line (204), comprising at least the steps of:

- calculating symmetrical sequence currents, which include zero sequence currents $i_0$, positive sequence currents $i_1$ and negative sequence currents $i_2$, of currents of each phase (204.1, 204.2, 204.3) of the transmission line (204) at local and remote ends of the protected transmission line (204);
- calculating phase differences $\varphi_{12}$ and $\varphi_{012}$ between combination currents $i_{12}$ and $i_{012}$ of the symmetrical sequence currents $i_0$, $i_1$ and $i_2$ of each ends of the transmission line (204);
- applying a fuzzy inference method on the phase differences $\varphi_{12}$ and $\varphi_{012}$, outputting a variable y whose value is calculated according to the values of the phase differences $\varphi_{12}$ and $\varphi_{012}$;
- calculating a value of a tripping signal for the control of at least one circuit breaker (200.1a, 200.2a, 200.3a, 200.1b, 200.2b, 200.3b) arranged on the transmission line (204) according to the values of the variable y and the values of the currents of each phase (204.1, 204.2, 204.3) at the local and remote ends of the protected transmission line (204).

11. The method according to claim 10, wherein the combination currents $i_{12}$ and $i_{012}$ are such that:

$$\mathtt{i_{12} = i_2 - k_{1g}i_1;}$$

$$\mathtt{i_{012} = k_{2p}i_2 + k_{1g}(i_1+i_0);}$$

with $k_{1g} = k_{2p} = 0$ when the current amplitude in each phase is higher than or equal to around 1.5 per unit in any phase, and $k_{1g}$ and $k_{2p}$ being non-zero real numbers otherwise.

12. The method according to one of claims 10 or 11, wherein the fuzzy inference method comprises at least the steps of:

- fuzzyfication operation which converts the values of the phase differences $\varphi_{12}$ and $\varphi_{012}$ into fuzzy variables $\mu(\varphi_{12})$ and $\mu(\varphi_{012})$;
- inference operation on fuzzy variables $\mu(\varphi_{12})$ and $\mu(\varphi_{012})$ according to a fuzzy rules base to output a final fuzzy sets $\mu(y)$;
- defuzzyfication operation which converts the final fuzzy sets $\mu(y)$ into the variable y.

13. The method according to claim 12, wherein the fuzzyfication operation converts the phase difference $\varphi_{12}$ into the fuzzy variable $\mu(\varphi_{12})$ such that:

- when the value of $\varphi_{12}$ is included between 0° and 75°, $\mu(\varphi_{12})$ is "Low" with a value equal to 1 and "High" with a value equal to 0;
- when the value of $\varphi_{12}$ is included between 80° and 180°, $\mu(\varphi_{12})$ is "Low" with a value equal to 0 and "High" with a value equal to 1;

- when the value of $\varphi_{12}$ is included between 75° and 80°, $\mu(\varphi_{12})$ is "Low" with a value equal to $1 - \dfrac{\varphi_{12} - 75}{5}$

and "High" with a value equal to $\dfrac{\varphi_{12} - 75}{5}$ .

14. The method according to one of claims 12 or 13, wherein the fuzzyfication operation converts the phase difference $\varphi_{012}$ into the fuzzy variable $\mu(\varphi_{012})$ such that:

- when the value of $\varphi_{012}$ is included between 0° and 75°, $\mu(\varphi_{012})$ is "Low" with a value equal to 1 and "High" with a value equal to 0;
- when the value of $\varphi_{012}$ is included between 85° and 180°, $\mu(\varphi_{012})$ is "Low" with a value equal to 0 and "High" with a value equal to 1;

- when $\varphi_{012}$ is included between 75° and 85°, $\mu(\varphi_{12})$ is "Low" with a value equal to $1 - \dfrac{\varphi_{012} - 75}{10}$ and "High" with a value equal to $\dfrac{\varphi_{012} - 75}{10}$ .

15. The method according to one of claims 12 to 14, wherein the inference operation is performed according to the following fuzzy rules base:

IF $\varphi_{012}$ is "High" AND $\varphi_{12}$ is "High" THEN y is "L";
IF $\varphi_{012}$ is "Low" AND $\varphi_{12}$ is "High" OR $\varphi_{012}$ is "High" AND $\varphi_{12}$ is "Low" THEN y is "M";
IF $\varphi_{012}$ is "Low" AND $\varphi_{12}$ is "Low" THEN y is "H";

with "L", "M" and "H" which are singletons corresponding to output values 0, 1 and 2 respectively.

16. The method according to claim 15, wherein the logical functions "AND" and "OR" of the fuzzy rules base correspond to operators "Product" and "Maximum" respectively.

17. The method according to one of claims 12 to 16, wherein the defuzzyfication operation is a weighting factor method, the resulting output value y being expressed by:

$$y = \frac{\mu_L y_L + \mu_M y_M + \mu_H y_H}{\mu_L + \mu_M + \mu_H} ,$$

with
$\mu_L = 1$ when y = 0, and $\mu_L = 0$ otherwise;
$\mu_M = 1$ when y = 1, and $\mu_M = 0$ otherwise;
$\mu_H = 1$ when y = 2, and $\mu_L = 0$ otherwise.

18. The method according to one of claims 10 to 17, wherein the values of bias percentages $k_1$ and $k_2$ of a stabilized characteristic which corresponds to the tripping signal are calculated such that:

$k_1 = 0.3 + 0.8y$ when the parameter y is higher than around 1.5, and $k_1 = 0.3$ otherwise;

$$k_2 = 1.5 + 1.6y;$$

the tripping conditions of the circuit breaker (200.1a, 200.2a, 200.3a, 200.1b, 200.2b, 200.3b) being:

for $|i_{bias}| < I_{S2}$, tripping when $|i_{diff}| > k_1 |i_{bias}| + I_{S1}$;
for $|i_{bias}| > I_{S2}$, tripping when $|i_{diff}| > k_2 |i_{bias}| - (k_2-k_1) I_{S2} + I_{S1}$;

with, for each phase (204.1, 204.2, 204.3) of the transmission line (204):

$$|i_{bias}| = 0.5(|i_s| + |i_r|)$$

and

$$|i_{diff}| = |i_s + i_r|,$$

with
$i_s$: current at the local end of the protected transmission line (204);
$i_r$: current at the remote end of the protected transmission line (204);
$I_{S1}$, $I_{S2}$: non-zero positive real numbers.

**19.** Current differential protection system (1000) comprising at least two relays (100a, 100b) according to one of claims 1 to 9, each being coupled to one end of a transmission line (204) and linked to the each other with communication means (206).

**Patentansprüche**

**1.** Relais (100, 100a, 100b) für den Differenzstromschutz wenigstens einer Übertragungsleitung (204), wobei das Relais wenigstens umfasst:

eine erste Recheneinrichtung (110) für symmetrische Folgeströme, die Nullströme $i_0$, Mitströme $i_1$ und Gegenströme $i_2$ der Ströme jeder Phase (204.1, 204.2, 204.3) der Übertragungsleitung (204) bei dem lokalen und bei dem fernen Ende der geschützten Übertragungsleitung (204) enthalten;
eine zweite Recheneinrichtung (110) für Phasendifferenzen $\varphi_{12}$ und $\varphi_{012}$ zwischen Kombinationsströmen $i_{12}$ und $i_{012}$ der symmetrischen Folgeströme $i_0$, $i_1$ und $i_2$ an jedem Ende der Übertragungsleitung (204);
ein Fuzzy-Interferenzsystem (112), das eine Variable y ausgibt, deren Wert in Übereinstimmung mit den Werten der Phasendifferenzen $\varphi_{12}$ und $\varphi_{012}$ berechnet wird;
eine dritte Recheneinrichtung (120), die ein Auslösesignal für die Steuerung wenigstens eines in der Übertragungsleitung (204) angeordneten und dem Relais (100, 100a, 100b) zugeordneten Schutzschalters (200.1 a, 200.2a, 200.3a, 200.1 b, 200.2b, 200.3b) ausgibt, wobei der Wert des Auslösesignals in Übereinstimmung mit den Werten der Variablen y und mit den Werten der Ströme jeder Phase (204.1, 204.2, 204.3) der Übertragungsleitung (204) bei dem lokalen und bei dem fernen Ende der geschützten Übertragungsleitung (204) berechnet wird.

**2.** Relais (100, 100a, 100b) nach Anspruch 1, wobei die Kombinationsströme $i_{12}$ und $i_{012}$ derart sind, dass

$$i_{12} = i_2 - k_{1g}i_1;$$

$$i_{012} = k_{2p}i_2 + k_{1g}(i_1 + i_0);$$

gilt, wobei $k_{1g} = k_{2p} = 0$ ist, wenn die Stromamplitude in jeder Phase größer oder gleich etwa 1,5 pro Einheit in irgendeiner Phase ist, und wobei $k_{1g}$ und $k_{2p}$ sonst von null verschiedene reelle Zahlen sind.

**3.** Relais (100, 100a, 100b) nach einem der vorhergehenden Ansprüche, wobei das Fuzzy-Interferenzsystem (112) wenigstens umfasst:

- eine Fuzzy-Umsetzungseinheit (114), die die Werte der Phasendifferenzen $\varphi_{12}$ und $\varphi_{012}$ in Fuzzy-Variablen $\mu(\varphi_{12})$ und $\mu(\varphi_{012})$ umsetzt;
- eine Interferenzoperationseinheit (116), die an den Fuzzy-Variablen $\mu(\varphi_{12})$ und $\mu(\varphi_{012})$ in Übereinstimmung mit einer Fuzzy-Regelbasis eine Interferenzoperation ausführt und im Ergebnis der Interferenzoperation abschließende Fuzzy-Mengen $\mu(y)$ ausgibt;
- eine Fuzzy-Rückumsetzungseinheit (118), die die abschließenden Fuzzy-Mengen $\mu(y)$ durch eine Fuzzy-Rückumsetzungsoperation in die Variable y umsetzt.

4. Relais (100, 100a, 100b) nach Anspruch 3, wobei die Fuzzy-Umsetzungseinheit (114) die Phasendifferenz $\varphi_{12}$ derart in die Fuzzy-Variable $\mu(\varphi_{12})$ umsetzt, dass:

- wenn der Wert von $\varphi_{12}$ zwischen 0° und 75° enthalten ist, $\mu(\varphi_{12})$ "Low" mit einem Wert gleich 1 und "High" mit einem Wert gleich 0 ist;
- wenn der Wert von $\varphi_{12}$ zwischen 80° und 180° enthalten ist, $\mu(\varphi_{12})$ "Low" mit einem Wert gleich 0 und "High" mit einem Wert gleich 1 ist;

- wenn der Wert von $\varphi_{12}$ zwischen 75° und 80° enthalten ist, $\mu(\varphi_{12})$ "Low" mit einem Wert gleich $1 - \dfrac{\varphi_{12} - 75}{5}$

und "High" mit einem Wert gleich $\dfrac{\varphi_{12} - 75}{5}$ ist.

5. Relais (100, 100a, 100b) nach einem der Ansprüche 3 oder 4, wobei die Fuzzy-Umsetzungseinheit (114) die Phasendifferenz $\varphi_{012}$ derart in die Fuzzy-Variable $\mu(\varphi_{012})$ umsetzt, dass:

- wenn der Wert von $\varphi_{012}$ zwischen 0° und 75° enthalten ist, $\mu(\varphi_{012})$ "Low" mit einem Wert gleich 1 und "High" mit einem Wert gleich 0 ist;
- wenn der Wert von $\varphi_{012}$ zwischen 85° und 180° enthalten ist, $\mu(\varphi_{012})$ "Low" mit einem Wert gleich 0 und "High" mit einem Wert gleich 1 ist;

- wenn der Wert von $\varphi_{012}$ zwischen 75° und 85° enthalten ist, $\mu(\varphi_{012})$ "Low" mit einem Wert gleich

$1 - \dfrac{\varphi_{012} - 75}{10}$ und "High" mit einem Wert gleich $\dfrac{\varphi_{012} - 75}{10}$ ist.

6. Relais (100, 100a, 100b) nach einem der Ansprüche 3 bis 5, wobei die Interferenzoperationseinheit (116) die Interferenzoperation in Übereinstimmung mit der folgenden Fuzzy-Regelbasis ausführt:

IF $\varphi_{012}$ ist "High" AND $\varphi_{12}$ ist "High" THEN y ist "L";
IF $\varphi_{012}$ ist "Low" AND $\varphi_{12}$ ist "High" OR $\varphi_{012}$ ist "High" AND $\varphi_{12}$ ist "Low" THEN y ist "M";
IF $\varphi_{012}$ ist "Low" AND $\varphi_{12}$ ist "Low" THEN y ist "H";
wobei "L", "M" und "H" Einermengen sind, die in dieser Reihenfolge den Ausgangswerten 0, 1 und 2 entsprechen.

7. Relais (100, 100a, 100b) nach Anspruch 6, wobei die Logikfunktionen "AND" und "OR" der Fuzzy-Regelbasis den Operationen "Produkt" bzw. "Maximum" entsprechen.

8. Relais (100, 100a, 100b) nach einem der Ansprüche 3 bis 7, wobei die Fuzzy-Rückumsetzungsoperation ein Gewichtungsfaktorverfahren ist, wobei der resultierende Ausgangswert y ausgedrückt wird durch:

$$y = \frac{\mu_L y_L + \mu_M y_M + \mu_H y_H}{\mu_L + \mu_M + \mu_H}$$

mit

$\mu_L$ = 1, wenn y = 0 ist, und $\mu_L$ = 0 sonst;

$\mu_M$ = 1, wenn y = 1 ist, und $\mu_M$ = 0 sonst;

$\mu_H$ = 1, wenn y = 2 ist, und $\mu_H$ = 0 sonst.

**9.** Relais (100, 100a, 100b) nach einem der vorhergehenden Ansprüche, wobei die dritte Recheneinrichtung (120) Werte von Bias-Prozentsätzen $k_1$ und $k_2$ einer stabilisierten Charakteristik, die dem Auslösesignal entspricht, derart berechnet, dass:

$k_1$ = 0,3 + 0,8y, wenn der Parameter y größer als etwa 1,5 ist, und $k_1$ = 0,3 sonst;

$$k_2 = 1,5 + 1,6y;$$

die Auslösebedingungen des Schutzschalters (200.1a, 200.2a, 200.3a, 200.1 b, 200.2b, 200.3b) Folgende sind:

für $|i_{bias}|$ < $I_{S2}$ Auslösung, wenn $|i_{diff}|$ > $k_1|i_{bias}|$ + $I_{S1}$ ist;

für $|i_{bias}|$ > $I_{S2}$ Auslösung, wenn $|i_{diff}|$ > $k_2|i_{bias}|$ - ($k_2$ - $k_1$) $I_{S2}$ + $I_{S1}$ ist;

wobei für jede Phase (204.1, 204.2, 204.3) der Übertragungsleitung (204) gilt:

$$|i_{bias}| = 0,5(|i_s| + |i_r|)$$

und

$$|i_{diff}| = |i_s + i_r|,$$

wobei

$i_s$: der Strom an dem lokalen Ende der geschützten Übertragungsleitung (204) ist;

$i_r$: der Strom an dem fernen Ende der geschützten Übertragungsleitung (204) ist;

$I_{S1}$ , $I_{S2}$: von null verschiedene positive reelle Zahlen sind.

**10.** Differenzstrom-Schutzverfahren wenigstens einer Übertragungsleitung (204), wobei das Verfahren wenigstens die folgenden Schritte umfasst:

- Berechnen symmetrischer Folgeströme, die Nullströme $i_0$, Mitströme $i_1$ und Gegenströme $i_2$ der Ströme jeder Phase (204.1, 204.2, 204.3) der Übertragungsleitung (204) bei dem lokalen und bei dem fernen Ende der geschützten Übertragungsleitung (204) enthalten;

- Berechnen von Phasendifferenzen $\varphi_{12}$ und $\varphi_{012}$ zwischen Kombinationsströmen $i_{12}$ und $i_{012}$ der symmetrischen Folgeströme $i_0$, $i_1$ und $i_2$ an jedem Ende der Übertragungsleitung (204);

- Anwenden eines Fuzzy-Interferenzverfahrens auf die Phasendifferenzen $\varphi_{12}$ und $\varphi_{012}$, Ausgeben einer Variablen y, deren Wert in Übereinstimmung mit den Werten der Phasendifferenzen $\varphi_{12}$ und $\varphi_{012}$ berechnet wird;

- Berechnen eines Werts eines Auslösesignals für die Steuerung wenigstens eines in der Übertragungsleitung (204) angeordneten Schutzschalters (200.1a, 200.2a, 200.3a, 200.1 b, 200.2b, 200.3b) in Übereinstimmung mit den Werten der Variablen y und mit den Werten der Ströme jeder Phase (204.1, 204.2, 204.3) bei dem lokalen und bei dem fernen Ende der geschützten Übertragungsleitung (204).

**11.** Verfahren nach Anspruch 10, wobei die Kombinationsströme $i_{12}$ und $i_{012}$ derart sind, dass

$$i_{12} = i_2 - k_{1g}i_1;$$

$$i_{012} = k_{2p}i_2 + k_{1g}(i_1 + i_0);$$

gilt, wobei $k_{1g} = k_{2p} = 0$ ist, wenn die Stromamplitude in jeder Phase größer oder gleich etwa 1,5 pro Einheit in irgendeiner Phase ist, und wobei $k_{1g}$ und $k_{2p}$ sonst von null verschiedene reelle Zahlen sind.

**12.** Verfahren nach einem der Ansprüche 10 oder 11, wobei das Fuzzy-Interferenzverfahren wenigstens die folgenden Schritte umfasst:

- eine Fuzzy-Umsetzungsoperation, die die Werte der Phasendifferenzen $\varphi_{12}$ und $\varphi_{012}$ in Fuzzy-Variablen $\mu(\varphi_{12})$ und $\mu(\varphi_{012})$ umsetzt;
- eine Interferenzoperation an den Fuzzy-Variablen $\mu(\varphi_{12})$ und $\mu(\varphi_{012})$ in Übereinstimmung mit einer Fuzzy-Regelbasis, um abschließende Fuzzy-Mengen $\mu(y)$ auszugeben;
- eine Fuzzy-Rückumsetzungsoperation, die die abschließenden Fuzzy-Mengen $\mu(y)$ in die Variable y umsetzt.

**13.** Verfahren nach Anspruch 12, wobei die Fuzzy-Umsetzungsoperation die Phasendifferenz $\varphi_{12}$ derart in die Fuzzy-Variable $\mu(\varphi_{12})$ umsetzt, dass:

- wenn der Wert von $\varphi_{12}$ zwischen 0° und 75° enthalten ist, $\mu(\varphi_{12})$ "Low" mit einem Wert gleich 1 und "High" mit einem Wert gleich 0 ist;
- wenn der Wert von $\varphi_{12}$ zwischen 80° und 180° enthalten ist, $\mu(\varphi_{12})$ "Low" mit einem Wert gleich 0 und "High" mit einem Wert gleich 1 ist;

- wenn der Wert von $\varphi_{12}$ zwischen 75° und 80° enthalten ist, $\mu(\varphi_{12})$ "Low" mit einem Wert gleich $1 - \dfrac{\varphi_{12} - 75}{5}$

und "High" mit einem Wert gleich $\dfrac{\varphi_{12} - 75}{5}$ ist.

**14.** Verfahren nach einem der Ansprüche 12 oder 13, wobei das Fuzzy-Umsetzungsverfahren die Phasendifferenz $\varphi_{012}$ derart in die Fuzzy-Variable $\mu(\varphi_{012})$ umsetzt, dass:

- wenn der Wert von $\varphi_{012}$ zwischen 0° und 75° enthalten ist, $\mu(\varphi_{012})$ "Low" mit einem Wert gleich 1 und "High" mit einem Wert gleich 0 ist;
- wenn der Wert von $\varphi_{012}$ zwischen 85° und 180° enthalten ist, $\mu(\varphi_{012})$ "Low" mit einem Wert gleich 0 und "High" mit einem Wert gleich 1 ist;

- wenn der Wert von $\varphi_{012}$ zwischen 75° und 85° enthalten ist, $\mu(\varphi_{12})$ "Low" mit einem Wert gleich $1 - \dfrac{\varphi_{012} - 75}{10}$

und "High" mit einem Wert gleich $\dfrac{\varphi_{012} - 75}{10}$ ist.

**15.** Verfahren nach einem der Ansprüche 12 bis 14, wobei die Interferenzoperation in Übereinstimmung mit der folgenden Fuzzy-Regelbasis ausgeführt wird:

IF $\varphi_{012}$ ist "High" AND $\varphi_{12}$ ist "High" THEN y ist "L";
IF $\varphi_{012}$ ist "Low" AND $\varphi_{12}$ ist "High" OR $\varphi_{012}$ ist "High" AND $\varphi_{12}$ ist "Low" THEN y ist "M";
IF $\varphi_{012}$ ist "Low" AND $\varphi_{12}$ ist "Low" THEN y ist "H";
wobei "L", "M" und "H" Einermengen sind, die in dieser Reihenfolge den Ausgangswerten 0, 1 und 2 entsprechen.

**16.** Verfahren nach Anspruch 15, wobei die Logikfunktionen "AND" und "OR" der Fuzzy-Regelbasis den Operationen "Produkt" bzw. "Maximum" entsprechen.

**17.** Verfahren nach einem der Ansprüche 12 bis 16, wobei die Fuzzy-Rückumsetzungsoperation ein Gewichtungsfaktorverfahren ist, wobei der resultierende Ausgangswert y ausgedrückt wird durch:

$$y = \frac{\mu_L y_L + \mu_M y_M + \mu_H y_H}{\mu_L + \mu_M + \mu_H}$$

mit
$\mu_L = 1$, wenn $y = 0$ ist, und $\mu_L = 0$ sonst;
$\mu_M = 1$, wenn $y = 1$ ist, und $\mu_M = 0$ sonst;
$\mu_H = 1$, wenn $y = 2$ ist, und $\mu_H = 0$ sonst.

18. Verfahren nach einem der Ansprüche 10 bis 17, wobei die Werte von Bias-Prozentsätzen $k_1$ und $k_2$ einer stabilisierten Charakteristik, die dem Auslösesignal entspricht, derart berechnet werden, dass:

$k_1 = 0,3 + 0,8y$, wenn der Parameter y größer als etwa 1,5 ist, und $k_1 = 0,3$ sonst;
$k_2 = 1,5 + 1,6y$;
die Auslösebedingungen des Schutzschalters (200.1a, 200.2a, 200.3a, 200.1b, 200.2b, 200.3b) Folgende sind:

für $|i_{bias}| < I_{S2}$ Auslösung, wenn $|i_{diff}| > k_1|i_{bias}| + I_{S1}$ ist;
für $|i_{bias}| > I_{S2}$ Auslösung, wenn $|i_{diff}| > k_2|i_{bias}| - (k_2 - k_1) I_{S2} + I_{S1}$ ist;
wobei für jede Phase (204.1, 204.2, 204.3) der Übertragungsleitung (204) gilt:

$$|i_{bias}| = 0,5(|i_s| + |i_r|)$$

und

$$|i_{diff}| = |i_s + i_r|,$$

wobei
$i_s$: der Strom an dem lokalen Ende der geschützten Übertragungsleitung (204) ist;
$i_r$: der Strom an dem fernen Ende der geschützten Übertragungsleitung (204) ist;
$I_{S1}$, $I_{S2}$: von null verschiedene positive reelle Zahlen sind.

19. Differenzstromschutzsystem (1000), das wenigstens zwei Relais (100a, 100b) nach einem der Ansprüche 1 bis 9 umfasst, wobei jedes mit einem Ende einer Übertragungsleitung (204) gekoppelt ist und wobei sie mit Kommunikationsmitteln (206) miteinander verknüpft sind.

## Revendications

1. Relais (100, 100a, 100b) pour la protection différentielle de courant d'au moins une ligne de transmission (204), comprenant au moins :

un premier calculateur (110) de courants symétriques, qui comprennent des courants homopolaires $i_0$, des courants directs $i_1$ et des courants inverses $i_2$, de courants de chaque phase (204.1, 204.2, 204.3) de la ligne de transmission (204) à des extrémités locales et éloignées de la ligne de transmission protégée (204) ;
un deuxième calculateur (110) de différences de phase $\varphi_{12}$ et $\varphi_{012}$ entre des courants de combinaison $i_{12}$ et $i_{012}$ des courants symétriques $i_0$, $i_1$ et $i_2$ de chaque extrémité de la ligne de transmission (204) ;
un système à inférence floue (112) qui émet en sortie une variable y dont la valeur est calculée selon les valeurs des différences de phase $\varphi_{12}$ et $\varphi_{012}$;
un troisième calculateur (120) qui émet en sortie un signal de déclenchement afin de commander au moins un disjoncteur (200.1a, 200.2a, 200.3a, 200.1b, 200.2b, 200.3b) agencé sur la ligne de transmission (204) et associé au relais (100, 100a, 100b), la valeur du signal de déclenchement étant calculée selon les valeurs de la variable y et les valeurs des courants de chaque phase (204.1, 204.2, 204.3) de la ligne de transmission (204) aux extrémités locales et éloignées de la ligne de transmission protégée (204).

2. Relais (100, 100a, 100b) selon la revendication 1, dans lequel les courants de combinaison $i_{12}$ et $i_{012}$ sont tels que :

$$i_{12} = i_2 - k_{1g}i_1 ;$$

$$i_{012} = k_{2p}i_2 + k_{1g}(i_1 + i_0) ;$$

où $k_{1g} = k_{2p} = 0$ lorsque l'amplitude de courant de chaque phase est supérieure ou égale à environ 1,5 par unité dans une phase quelconque, et $k_{1g}$ et $k_{2p}$ étant sinon des nombres réels non nuls.

3. Relais (100, 100a, 100b) selon l'une des revendications précédentes, dans lequel le système à inférence floue (112) comprend au moins :

- une unité de fuzzification (114) qui convertit les valeurs des différences de phase $\varphi_{12}$ et $\varphi_{012}$ en des variables floues $\mu(\varphi_{12})$ et $\mu(\varphi_{012})$ ;
- une unité d'opération d'inférence (116) qui réalise des opérations d'inférence sur des variables floues $\mu(\varphi_{12})$ et $\mu(\varphi_{012})$ selon une base de règles floues et émet en sortie des ensembles flous finaux $\mu(y)$ comme résultat de ladite opération d'inférence ;
- une unité de défuzzification (118) qui convertit les ensembles flous finaux $\mu(y)$ en la variable y grâce à une opération de défuzzification.

4. Relais (100, 100a, 100b) selon la revendication 3, dans lequel l'unité de fuzzification (114) convertit la différence de phase $\varphi_{12}$ en la variable floue $\mu(\varphi_{12})$ de sorte que :

- lorsque la valeur de $\varphi_{12}$ est comprise entre 0° et 75°, $\mu(\varphi_{12})$ est « Low » avec une valeur égale à 1 et « High » avec une valeur égale à 0 ;
- lorsque la valeur de $\varphi_{12}$ est comprise entre 80° et 180°, $\mu(\varphi_{12})$ est « Low » avec une valeur égale à 0 et « High » avec une valeur égale à 1 ;

- lorsque la valeur de $\varphi_{12}$ est comprise entre 75° et 80°, $\mu(\varphi_{12})$ est « Low » avec une valeur égale à $1 - \dfrac{\varphi_{12} - 75}{5}$

et « High » avec une valeur égale à $\dfrac{\varphi_{12} - 75}{5}$ .

5. Relais (100, 100a, 100b) selon l'une des revendications 3 ou 4, dans lequel l'unité de fuzzification (114) convertit la différence de phase $\varphi_{012}$ en la variable floue $\mu(\varphi_{012})$ de sorte que :

- lorsque la valeur de $\varphi_{012}$ est comprise entre 0° et 75°, $\mu(\varphi_{012})$ est « Low » avec une valeur égale à 1 et « High » avec une valeur égale à 0 ;
- lorsque la valeur de $\varphi_{012}$ est comprise entre 85° et 180°, $\mu(\varphi_{012})$ est « Low » avec une valeur égale à 0 et « High » avec une valeur égale à 1 ;

- lorsque la valeur de $\varphi_{012}$ est comprise entre 75° et 85°, $\mu(\varphi_{012})$ est « Low » avec une valeur égale à $1 - \dfrac{\varphi_{012} - 75}{10}$ et « High » avec une valeur égale à $\dfrac{\varphi_{012} - 75}{10}$ .

6. Relais (100, 100a, 100b) selon l'une des revendications 3 à 5, dans lequel l'unité d'opération d'inférence (116) réalise l'opération d'inférence selon la base de règles floues suivante :

IF $\varphi_{012}$ est « High » AND $\varphi_{12}$ est « High » THEN y est « L » ;
IF $\varphi_{012}$ est « Low » AND $\varphi_{12}$ est « High » OR $\varphi_{012}$ est « High » AND $\varphi_{12}$ est « Low » THEN y est « M » ;
IF $\varphi_{012}$ est « Low » AND $\varphi_{12}$ est « Low » THEN y est « H » ;
où « L », « M » et « H » sont des singletons correspondant aux valeurs de sortie 0, 1 et 2 respectivement.

**7.** Relais (100, 100a, 100b) selon la revendication 6, dans lequel les fonctions logiques « AND » et « OR » de la base de règles floues correspondent aux opérateurs « Product » et « Maximum » respectivement.

**8.** Relais (100, 100a, 100b) selon l'une des revendications 3 à 7, dans lequel l'opération de défuzzification est une méthode de pondération, la valeur de sortie résultante y étant exprimée par :

$$y = \frac{\mu_L y_L + \mu_M y_M + \mu_H y_H}{\mu_L + \mu_M + \mu_H} ,$$

où
$\mu_L$ = 1 lorsque y = 0, et $\mu_L$ = 0 sinon ;
$\mu_M$ = 1 lorsque y = 1, et $\mu_M$ = 0 sinon ;
$\mu_H$ = 1 lorsque y = 2, et $\mu_L$ = 0 sinon.

**9.** Relais (100, 100a, 100b) selon l'une des revendications précédentes, dans lequel le troisième calculateur (120) calcule des valeurs des pourcentages de biais $k_1$ et $k_2$ d'une caractéristique stabilisée qui correspond au signal de déclenchement de sorte que :

$k_1$ = 0,3 + 0,8y lorsque le paramètre y est supérieur à environ 1,5, et $k_1$ = 0,3 sinon ;
$k_2$ = 1, 5 + 1, 6y ;
les conditions de déclenchement du disjoncteur (200.1a, 200.2a, 200.3a, 200.1b, 200.2b, 200.3b) étant :

pour $|i_{biais}| < I_{S2}$, déclenchement lorsque $|i_{diff}| > k_1|i_{biais}| + I_{S1}$ ;
pour $|i_{biais}| > I_{S2}$, déclenchement lorsque $|i_{diff}| > k_2|i_{biais}| - (k_2 - k_1)I_{S2} + I_{S1}$ ;
où, pour chaque phase (204.1, 204.2, 204.3) de la ligne de transmission (204) :

$$|i_{biais}| = 0,5(|i_s| + |i_r|),$$

et

$$|i_{diff}| = |i_s + i_r|,$$

où
$i_s$ : courant à l'extrémité locale de la ligne de transmission protégée (204) ;
$i_r$ : courant à l'extrémité éloignée de la ligne de transmission protégée (204) ;
$I_{S1}$, $I_{S2}$ : nombres réels positifs non nuls.

**10.** Procédé de protection différentielle de courant d'au moins une ligne de transmission (204), comprenant au moins les étampes :

- de calcul de courants symétriques, qui comprennent des courants homopolaires $i_0$, des courants directs $i_1$ et des courants inverses $i_2$, de courants de chaque phase (204.1, 204.2, 204.3) de la ligne de transmission (204) à des extrémités locales et éloignées de la ligne de transmission protégée (204) ;
- de calcul de différences de phase $\varphi_{12}$ et $\varphi_{012}$ entre des courants de combinaison $i_{12}$ et $i_{012}$ des courants symétriques $i_0$, $i_1$ et $i_2$ de chaque extrémité de la ligne de transmission (204) ;
- d'application d'une méthode d'inférence floue sur les différences de phase $\varphi_{12}$ et $\varphi_{012}$, en émettant en sortie une variable y dont la valeur est calculée selon les valeurs des différences de phase $\varphi_{12}$ et $\varphi_{012}$ ;

- de calcul d'une valeur d'un signal de déclenchement pour la commande d'au moins un disjoncteur (200.1a, 200.2a, 200.3a, 200.1b, 200.2b, 200.3b) agencé sur la ligne de transmission (204) selon les valeurs de la variable y et les valeurs des courants de chaque phase (204.1, 204.2, 204.3) aux extrémités locales et éloignées de la ligne de transmission protégée (204).

**11.** Procédé selon la revendication 10, dans lequel les courants de combinaison $i_{12}$ et $i_{012}$ sont tels que :

$$i_{12} = i_2 - k_{1g}i_1 \; ;$$

$$i_{012} = k_{2p}i_2 + k_{1g}(i_1 + i_0) \; ;$$

où $k_{1g} = k_{2p} = 0$ lorsque l'amplitude de courant dans chaque phase est supérieure ou égale à environ 1,5 par unité dans une phase quelconque, et $k_{1g}$ et $k_{2p}$ étant sinon des nombres réels non nuls.

**12.** Procédé selon l'une des revendications 10 ou 11, dans lequel la méthode d'inférence floue comprend au moins les étampes :

- d'opération de fuzzification qui convertit les valeurs des différences de phase $\varphi_{12}$ et $\varphi_{012}$ en des variables floues $\mu(\varphi_{12})$ et $\mu(\varphi0_{12})$ ;
- d'opération d'inférence sur les variables floues $\mu(\varphi_{12})$ et $\mu(\varphi_{012})$ selon une base de règles floues afin d'émettre en sortie des ensembles flous finaux $\mu(y)$ ;
- d'opération de défuzzification qui convertit les ensembles flous finaux $\mu(y)$ en la variable y.

**13.** Procédé selon la revendication 12, dans lequel l'opération de fuzzification convertit la différence de phase $\varphi_{12}$ en la variable floue $\mu(\varphi_{12})$ de sorte que :

- lorsque la valeur de $\varphi_{12}$ est comprise entre 0° et 75°, $\mu(\varphi_{12})$ est « Low » avec une valeur égale à 1 et « High » avec une valeur égale à 0 ;
- lorsque la valeur de $\varphi_{12}$ est comprise entre 80° et 180°, $\mu(\varphi_{12})$ est « Low » avec une valeur égale à 0 et « High » avec une valeur égale à 1 ;

- lorsque la valeur de $\varphi_{12}$ est comprise entre 75° et 80°, $\mu(\varphi_{12})$ est « Low » avec une valeur égale à $1 - \dfrac{\varphi_{12} - 75}{5}$ et « High » avec une valeur égale à $\dfrac{\varphi_{12} - 75}{5}$.

**14.** Procédé selon l'une des revendications 12 ou 13, dans lequel l'opération de fuzzification convertit la différence de phase $\varphi_{012}$ en la variable floue $\mu(\varphi_{012})$ de sorte que :

- lorsque la valeur de $\varphi_{012}$ est comprise entre 0° et 75°, $\mu(\varphi_{012})$ est « Low » avec une valeur égale à 1 et « High » avec une valeur égale à 0 ;
- lorsque la valeur de $\varphi_{012}$ est comprise entre 85° et 180°, $\mu(\varphi_{012})$ est « Low » avec une valeur égale à 0 et « High » avec une valeur égale à 1 ;

- lorsque $\varphi_{012}$ est compris entre 75° et 85°, $\mu(\varphi_{12})$ est « Low » avec une valeur égale à $1 - \dfrac{\varphi_{012} - 75}{10}$ et « High » avec une valeur égale à $\dfrac{\varphi_{012} - 75}{10}$.

**15.** Procédé selon l'une des revendications 12 à 14, dans lequel l'opération d'inférence est réalisée selon la base de règles floues suivante :

IF $\varphi_{012}$ est « High » AND $\varphi_{12}$ est « High » THEN y est « L » ;
IF $\varphi_{012}$ est « Low » AND $\varphi_{12}$ est « High » OR $\varphi_{012}$ est « High » AND $\varphi_{12}$ est « Low » THEN y est « M » ;
IF $\varphi_{012}$ est « Low » AND $\varphi_{12}$ est « Low » THEN y est « H » ;
où « L », « M » et « H » sont des singletons correspondant aux valeurs de sortie 0, 1 et 2 respectivement.

16. Procédé selon la revendication 15, dans lequel les fonctions logiques « AND » et « OR » de la base de règles floues correspondent aux opérateurs « Product » et « Maximum » respectivement.

17. Procédé selon l'une des revendications 12 à 16, dans lequel l'opération de défuzzification est une méthode de pondération, la valeur de sortie résultante y étant exprimée par :

$$y = \frac{\mu_L y_L + \mu_M y_M + \mu_H y_H}{\mu_L + \mu_M + \mu_H} ,$$

où
$\mu_L = 1$ lorsque y = 0, et $\mu_L = 0$ sinon ;
$\mu_M = 1$ lorsque y = 1, et $\mu_M = 0$ sinon ;
$\mu_H = 1$ lorsque y = 2, et $\mu_L = 0$ sinon.

18. Procédé selon l'une des revendications 10 à 17, dans lequel les valeurs de pourcentage du biais $k_1$ et $k_2$ d'une caractéristique stabilisée qui correspond au signal de déclenchement sont calculées de sorte que :

$k_1 = 0,3 + 0,8y$ lorsque le paramètre y est supérieur à environ 1,5, et $k_1 = 0,3$ sinon ;

```
k₂ = 1,5 + 1,6y ;
```

les conditions de déclenchement du disjoncteur (200.1a, 200.2a, 200.3a, 200.1b, 200.2b, 200.3b) étant :

pour $|i_{biais}| < I_{S2}$, déclenchement lorsque $|i_{diff}| > k_1|i_{biais}| + I_{S1}$ ;
pour $|i_{biais}| > I_{S2}$, déclenchement lorsque $|i_{diff}| > k_2|i_{biais}| - (k_2 - k_1)I_{S2} + I_{S1}$ ;
où, pour chaque phase (204.1, 204.2, 204.3) de la ligne de transmission (204) :

```
|i_biais| = 0,5(|i_s| + |i_r|),
```

et

```
|i_diff| = |i_s + i_r|,
```

où
$i_s$ : courant à l'extrémité locale de la ligne de transmission protégée (204) ;
$i_r$ : courant à l'extrémité éloignée de la ligne de transmission protégée (204) ;
$I_{S1}$, $I_{S2}$ : nombres réels positifs non nuls.

19. Système de protection différentielle de courant (1000) comprenant au moins deux relais (100a, 100b) selon l'une des revendications 1 à 9, chacun étant couplé à une extrémité d'une ligne de transmission (204) et lié à chacun des autres avec des moyens de communication (206).

## FIG. 1

## FIG. 2

1000

204
204.1

202.1a    200.1a    200.1b    202.1b

202.2a    200.2a    204.2    200.2b    202.2b

202.3a    200.3a    204.3    200.3c    202.3b

100a    100b

206

# FIG. 3

106    100

102    108    120    $I_{dif}$

104

$I_{bias}$

110    112    206

# FIG. 4

FIG. 5

FIG. 6

FIG. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20070070565 A